# EUROPÄISCHE PATENTANMELDUNG

(11) **EP 4 213 334 A1**
(43) Veröffentlichungstag der Anmeldung: **19.07.2023**
(21) Anmeldenummer: 22212166.7
(22) Anmeldetag: 08.12.2022
(51) Int. Cl.: H02J 7/00, H01M 10/44

(54) **AKKUMULATOR MIT BATTERIEMANAGEMENTSYSTEM**

(30) Priorität: 12.01.2022 DE 102022100612
(71) Anmelder: Miele & Cie. KG, 33332 Gütersloh (DE)
(72) Erfinder: Wagner, Sergej, 33739 Bielefeld (DE); Walfort, Dennis, 33604 Bielefeld (DE)

(57) **Zusammenfassung**

Die Erfindung betrifft einen Akkumulator (1) mit wenigstens einer galvanischen Zelle (10) und mit einem Batteriemanagementsystem (11), welches ausgebildet und eingerichtet ist, den Akkumulator (1) zu betreiben, wobei das Batteriemanagementsystem (11) aufweist:
• einen Lader-Eingang (12), welcher ausgebildet und eingerichtet ist, mit einem Ladegerät verbunden zu werden und das Ladegerät stromführend mit der galvanischen Zelle (10) zu verbinden, und
• einen Verbraucher-Ausgang (14), welcher ausgebildet und eingerichtet ist, mit einem Verbraucher verbunden zu werden und die galvanische Zelle (10) stromführend mit dem Verbraucher zu verbinden,

Der Akkumulator (1) ist dadurch gekennzeichnet, dass zwischen dem Lader-Eingang (12) und der galvanischen Zelle (10) ein Strombegrenzer (13) des Lader-Eingangs (12) vorgesehen ist, welcher ausgebildet und eingerichtet ist,
• in einem ersten Zustand den Stromfluss zwischen dem Lader-Eingang (12) und der galvanischen Zelle (10) zu begrenzen und
• in einem zweiten Zustand den Stromfluss zwischen dem Lader-Eingang (12) und der galvanischen Zelle (10) nicht zu begrenzen, und/oder

zwischen der galvanischen Zelle (10) und dem Verbraucher-Ausgang (14) ein Strombegrenzer (15) des Verbraucher-Ausgangs (14) vorgesehen ist, welcher ausgebildet und eingerichtet ist,
• in einem ersten Zustand den Stromfluss zwischen der galvanischen Zelle (10) und dem Verbraucher-Ausgang (14) zu begrenzen und
• in einem zweiten Zustand den Stromfluss zwischen der galvanischen Zelle (10) und dem Verbraucher-Ausgang (14) nicht zu begrenzen.

## Beschreibung

Die Erfindung betrifft einen Akkumulator mit Batteriemanagementsystem, ein Verfahren zum Betreiben eines Akkumulators mittels eines Batteriemanagementsystems sowie ein Haushaltsgerät mit einem derartigen Akkumulator bzw. zur Durchführungen eines derartigen Verfahrens.

Viele elektronische Geräte werden heutzutage mittels eines wiederaufladbaren elektrischen Energiespeichers in Form eines Akkumulators, kurz Akku genannt, betrieben bzw. elektrisch versorgt bzw. gespeist. Dies kann die mobile Nutzung, d.h. die Nutzung des elektronischen Geräts unabhängig von einer kabel- bzw. leistungsgebundenen elektrischen Energieversorgung, ermöglichen. Zu diesen elektronischen Geräten gehören auch die Haushaltsgeräte wie beispielsweise die akkubetriebenen Staubsauger bzw. Handstaubsauger.

Ein Akkumulator stellt ein wiederaufladbares galvanisches Element dar, welches elektrische Energie auf elektrochemischer Basis speichern kann. Das galvanische Element besteht im Wesentlichen aus zwei Elektroden und einem Elektrolyten. Das galvanische Element kann auch als galvanische Zelle, kurz Zelle, bezeichnet werden. Üblicherweise weist ein Akkumulator mehrere galvanische Elemente bzw. Zellen auf, um die Speicherkapazität zu erhöhen. Der Akkumulator wird von einem Batteriemanagementsystem (BMS) betrieben, welches üblicherweise als elektronische Schaltung umgesetzt ist und zum Akkumulator dazugehört, d.h. in den Akkumulator integriert ist. Das Batteriemanagementsystem dient der Überwachung, der Regelung und dem Schutz des Akkumulators bzw. seiner galvanischen Elemente. Zu den Aufgaben bzw. Funktionen des Batteriemanagementsystems können beispielsweise eine Ladezustandserkennung, ein Tiefentladeschutz und ein Überladeschutz gehören.

Hierzu ist das Batteriemanagementsystem als elektronische Schaltung derart zwischen den galvanischen Zellen des Akkumulators und der Umgebung des Akkumulators angeordnet, dass über eine Schnittstelle als Lader-Eingang eine elektrisch leitende Verbindung zwischen einem Ladegerät und dem Batteriemanagementsystem hergestellt werden kann, um die Zellen des Akkumulators von außen aufzuladen, d.h. um elektrische Energie in den galvanischen Elementen zu speichern. Das Batteriemanagementsystem weist ferner eine weitere Schnittstelle als Verbraucher-Ausgang auf, so dass eine elektrisch leitende Verbindung zwischen dem Batteriemanagementsystem und einem elektrischen Verbraucher hergestellt werden kann, um den elektrischen Verbraucher mittels des Akkumulators zu betreiben, d.h. um elektrische Energie aus den galvanischen Elementen zu entnehmen.

Betrachtet man nun die elektronischen Elemente des Akkumulators, so weisen die Zellen einen konstant niedrigen ohmschen Innenwiderstand auf. Innerhalb des Batteriemanagementsystems, d.h. innerhalb dessen elektronischer Schaltung, weisen die elektronischen Elemente der Schnittstelle des Lader-Eingangs gegenüber den Zellen, d.h. die elektronischen Elemente des internen Lader-Ausgangs, eine große und geladene Kapazität mit geringem Innenwiderstand auf. Die Schnittstelle des Verbraucher-Ausgangs des Batteriemanagementsystems, d.h. die elektronischen Elemente des internen Verbraucher-Eingangs, weist gegenüber den Zellen eine große und ungeladene Kapazität mit geringem Innenwiderstand auf.

Wird nun ein Ladegerät mit dem Akkumulator oder der Akkumulator mit einem Verbraucher elektrisch verbunden, so können kontakt- und bzw. oder komponentenschädigende "Blitze" entstehen, welche im Potentialausgleich der zu verbindenden Komponenten zu begründen sind und mit großen Stromamplituden stattfinden können. Dies kann zu Schädigungen der jeweils beteiligten elektronischen Geräte bzw. des Akkumulators führen.

Um dies hinsichtlich der elektrisch leitfähigen Verbindung zwischen dem Ladegerät und dem Akkumulator zu vermeiden, ist es erforderlich, das Ladegerät an den Akkumulator anzupassen und elektronische Elemente vorzusehen, welche den Stromfluss beim Potentialausgleich begrenzen können. Um dies hinsichtlich der elektrisch leitfähigen Verbindung zwischen dem Akkumulator und dem Verbraucher zu vermeiden, ist es ebenso erforderlich, den Verbraucher an den Akkumulator anzupassen und elektronische Elemente vorzusehen, welche den Stromfluss beim Potentialausgleich begrenzen können. In jedem Fall führt dies jedoch zu einer Veränderung bzw. Anpassung der elektronischen Schaltungen des Ladegeräts bzw. des Verbrauchers und somit zu einem entsprechenden Aufwand mit entsprechenden Kosten.

Der Erfindung stellt sich somit das Problem, einen Akkumulator zur Verfügung zu stellen, so dass erhöhte Stromflüsse beim elektrischen Verbinden des Akkumulators mit einem Ladegerät und bzw. oder mit einem Verbraucher vermieden oder zumindest reduziert werden können. Dies soll möglichst einfach, sicher und bzw. oder kostengünstig erfolgen können. Zumindest soll eine Alternative zu bekannten Akkumulatoren zur Verfügung gestellt werden.

Erfindungsgemäß wird dieses Problem durch einen Akkumulator, durch ein Verfahren sowie durch ein Haushaltsgerät mit den Merkmalen der unabhängigen Ansprüche gelöst.

Vorteilhafte Ausgestaltungen und Weiterbildungen der Erfindung ergeben sich aus den nachfolgenden abhängigen Ansprüchen.

Somit betrifft die Erfindung einen Akkumulator mit wenigstens einer galvanischen Zelle und mit einem Batteriemanagementsystem, welches ausgebildet und eingerichtet ist, den Akkumulator zu betreiben, wobei das Batteriemanagementsystem aufweist:
- einen Lader-Eingang, welcher ausgebildet und eingerichtet ist, mit einem Ladegerät verbunden zu werden und das Ladegerät stromführend mit der galvanischen Zelle zu verbinden, und
- einen Verbraucher-Ausgang, welcher ausgebildet und eingerichtet ist, mit einem Verbraucher verbunden zu werden und die galvanische Zelle stromführend mit dem Verbraucher zu verbinden.

Der Akkumulator ist dadurch gekennzeichnet, dass zwischen dem Lader-Eingang und der galvanischen Zelle ein Strombegrenzer des Lader-Eingangs vorgesehen ist, welcher ausgebildet und eingerichtet ist,
- in einem ersten Zustand den Stromfluss zwischen dem Lader-Eingang und der galvanischen Zelle zu begrenzen, und
- in einem zweiten Zustand den Stromfluss zwischen dem Lader-Eingang und der galvanischen Zelle nicht zu begrenzen, und bzw. oder
zwischen der galvanischen Zelle und dem Verbraucher-Ausgang ein Strombegrenzer des Verbraucher-Ausgangs vorgesehen ist, welcher ausgebildet und eingerichtet ist,
- in einem ersten Zustand den Stromfluss zwischen der galvanischen Zelle und dem Verbraucher-Ausgang zu begrenzen, und
- in einem zweiten Zustand den Stromfluss zwischen der galvanischen Zelle und dem Verbraucher-Ausgang nicht zu begrenzen.

Die Strombegrenzer können jeweils als elektronische Schaltung umgesetzt werden, welche insbesondere von einer Steuerungseinheit des Batteriemanagementsystems in den beiden Zuständen betrieben werden können.

Es ist anzumerken, dass "begrenzt" im Kontext der Erfindung kein vollständiges Blockieren des Stromflusses bedeuten muss. Weiterhin sind erfindungsgemäß zwischen den Stellungen "begrenzt" und "nicht begrenzt" auch Zwischenstufen, d.h. mit einer der jeweiligen Stufe entsprechenden Begrenzungsstärke, möglich. Die Schritthöhe einer mehrstufigen Begrenzung kann beispielsweise über RC-Glieder und die Frequenz mittels Pulsweitenmodulation (PWM) eingestellt werden. Mit einer stufenweisen Begrenzung, die über ein bestimmtes Zeitintervall nach und nach erfolgt, ist dadurch in einer erweiterten Ausführungsform erfindungsgemäß eine "Softstart"-Funktion möglich.

In jedem Fall liegt der Erfindung die Erkenntnis zugrunde, dass in der eingangs beschriebenen Situation, d.h. wenn eine elektrisch leitfähige Verbindung zwischen dem Akkumulator bzw. dessen Batteriemanagementsystem und einem Ladegerät bzw. einem Verbraucher hergestellt wird, kurzzeitig ein unzulässig hoher Stromfluss aufgrund des Potentialausgleichs auftreten kann, welcher schädlich für die beteiligten Geräte sein kann.

Um dies seitens des Akkumulators selbst bzw. dessen Batteriemanagementsystem zu vermeiden, kann erfindungsgemäß ein Strombegrenzer zwischen Lader-Eingang und galvanischer Zelle und bzw. oder zwischen galvanischer Zelle und Verbraucher-Ausgang vorgesehen werden, welcher in zumindest zwei Zuständen betreibbar bzw. zwischen zumindest zwei Zuständen schaltbar sein kann. Somit kann der jeweilige Strombegrenzer im ersten begrenzenden Zustand betrieben werden, um den kurzzeitig auftretenden unzulässig hohen Stromfluss zu begrenzen und somit die beteiligten Geräte hiervor zu schützen. Tritt kein unzulässig hoher Stromfluss auf, so kann auf diese Strombegrenzung verzichtet werden, indem der jeweilige Strombegrenzer im zweiten nicht-strombegrenzenden Zustand betrieben wird. Wie vorstehend erwähnt, kann dabei eine schrittweise Umschaltung zwischen "begrenzt" und "nicht begrenzt" über ein Zeitintervall erfolgen, um eine "Softstart"-Funktion zu realisieren.

Gemäß einem Aspekt der Erfindung weist das Batteriemanagementsystem eine Steuerungseinheit auf, welche ausgebildet und eingerichtet ist, den Strombegrenzer des Lader-Eingangs und bzw. oder den Strombegrenzer des Verbraucher-Ausgangs im ersten Zustand und im zweiten Zustand zu betreiben. Dies kann eine konkrete Möglichkeit zur Umsetzung darstellen.

Gemäß einem weiteren Aspekt der Erfindung ist die Steuerungseinheit des Batteriemanagementsystems ferner ausgebildet und eingerichtet,
- einen Stromfluss zwischen dem Lader-Eingang und der galvanischen Zelle und bzw. oder einen Stromfluss zwischen der galvanischen Zelle und dem Verbraucher-Ausgang zu erfassen, und
- den Strombegrenzer des Lader-Eingangs und bzw. oder den Strombegrenzer des Verbraucher-Ausgangs im ersten Zustand zu betreiben, falls kein Stromfluss vorliegt.

Somit kann seitens des Batteriemanagementsystems erkannt werden, falls die galvanische Zelle nicht elektrisch leitfähig mit einem Gerät verbunden ist und entsprechend kein Strom fließt, d.h. kein Stromfluss vorliegt. Da in diesem Fall damit gerechnet werden muss, dass irgendwann eine elektrisch leitfähige Verbindung mit einem Gerät hergestellt werden und dann aufgrund des Potentialausgleichs ein unzulässig hoher Stromfluss auftreten wird, kann seitens des Batteriemanagementsystems vorsorglich der erste Zustand eines Strombegrenzers oder beider Strombegrenzer eingenommen werden, um auf das Herstellen der elektrisch leitfähigen Verbindung vorbereitet zu sein. Dies kann sicherstellen, dass der unzulässig hohe Stromfluss durch eine entsprechende Begrenzung vermieden werden kann.

Gemäß einem weiteren Aspekt der Erfindung wird das Betreiben im ersten Zustand fortgesetzt, falls ein Stromfluss beginnt. Dies kann über einen vorbestimmten Zeitraum erfolgen, welcher der Zeitdauer des Potentialausgleichs entspricht, ggfs. mit einem gewissen zeitlichen Puffer. Dieser vorbestimmte Zeitraum kann experimentell ermittelt oder berechnet worden und insbesondere in einem Speicher der Steuerungseinheit des Batteriemanagementsystems hinterlegt sein. Hierdurch kann erreicht werden, dass der erste Zustand ausreichend lange beibehalten wird, um den unzulässig hohen Stromfluss durch eine entsprechende Begrenzung zu vermeiden. Dies kann dann anschließend den normalen Betrieb des Akkumulators ohne Strombegrenzung ermöglichen.

Gemäß einem weiteren Aspekt der Erfindung ist die Steuerungseinheit des Batteriemanagementsystems ferner ausgebildet und eingerichtet, den Strombegrenzer des Lader-Eingangs und bzw. oder den Strombegrenzer des Verbraucher-Ausgangs im zweiten Zustand zu betreiben, falls ein Stromfluss in einer vorbestimmten zulässigen Höhe vorliegt. Somit kann seitens der Steuerungseinheit messtechnisch erkannt werden, wenn die Zeitdauer des Potentialausgleichs beendet ist, um dann anschließend den normalen Betrieb des Akkumulators ohne Strombegrenzung ermöglichen.

Gemäß einem weiteren Aspekt der Erfindung ist der Strombegrenzer des Lader-Eingangs und bzw. oder der Strombegrenzer des Verbraucher-Ausgangs ein selbstsperrender n-Kanal MOS-Fet. Dies kann eine konkrete Möglichkeit der Umsetzung darstellen.

Die vorliegende Erfindung betrifft auch ein Verfahren zum Betreiben eines Akkumulators mittels eines Batteriemanagementsystems, wobei der Akkumulator wenigstens eine galvanische Zelle aufweist und wobei das Batteriemanagementsystem aufweist:
- einen Lader-Eingang, welcher ausgebildet und eingerichtet ist, mit einem Ladegerät verbunden zu werden und das Ladegerät stromführend mit der galvanischen Zelle zu verbinden, und
- einen Verbraucher-Ausgang, welcher ausgebildet und eingerichtet ist, mit einem Verbraucher verbunden zu werden und die galvanische Zelle stromführend mit dem Verbraucher zu verbinden,
mit wenigstens den Schritten in dieser Reihenfolge:
- Begrenzen des Stromflusses zwischen dem Lader-Eingang und der galvanischen Zelle oder zwischen der galvanischen Zelle und dem Verbraucher-Ausgang, und
- Nicht-Begrenzen des Stromflusses zwischen dem Lader-Eingang und der galvanischen Zelle oder zwischen der galvanischen Zelle und dem Verbraucher-Ausgang.

Somit können die Funktionen des zuvor beschriebenen erfindungsgemäßen Akkumulators auch mittels eines erfindungsgemäßen Verfahrens umgesetzt werden. Dabei erfolgen die Schritte nacheinander und vorzugsweise in Abhängigkeit eines vorliegenden oder nichtvorliegenden Stromflusses, welcher wie zuvor beschrieben erfasst werden kann.

Gemäß einem Aspekt der Erfindung weist das Verfahren den weiteren Schritt vor dem Begrenzen auf:
- Erfassen eines Stromflusses zwischen dem Lader-Eingang und der galvanischen Zelle und bzw. oder zwischen der galvanischen Zelle und dem Verbraucher-Ausgang,
wobei das Begrenzen des Stromflusses zwischen dem Lader-Eingang und der galvanischen Zelle oder zwischen der galvanischen Zelle und dem Verbraucher-Ausgang dann erfolgt, falls kein Stromfluss vorliegt. Auf diese Art und Weise können die zuvor anhand des erfindungsgemäßen Akkumulators beschriebenen Eigenschaften auch mittels des erfindungsgemäßen Verfahrens umgesetzt werden.

Gemäß einem weiteren Aspekt der Erfindung wird das Begrenzen fortgesetzt, falls ein Stromfluss beginnt. Auf diese Art und Weise können die zuvor anhand des erfindungsgemäßen Akkumulators beschriebenen Eigenschaften auch mittels des erfindungsgemäßen Verfahrens umgesetzt werden.

Gemäß einem weiteren Aspekt der Erfindung erfolgt das Nicht-Begrenzen des Stromflusses zwischen dem Lader-Eingang und der galvanischen Zelle oder zwischen der galvanischen Zelle und dem Verbraucher-Ausgang dann erfolgt, falls ein Stromfluss in einer vorbestimmten zulässigen Höhe vorliegt. Auf diese Art und Weise können die zuvor anhand des erfindungsgemäßen Akkumulators beschriebenen Eigenschaften auch mittels des erfindungsgemäßen Verfahrens umgesetzt werden.

Die vorliegende Erfindung betrifft auch ein Haushaltsgerät, vorzugsweise einen Staubsauger, besonders vorzugsweise einen Handstaubsauger, mit wenigstens einem Akkumulator wie zuvor beschrieben oder zur Durchführung eines Verfahrens wie zuvor beschrieben. Hierdurch kann der erfindungsgemäße Akkumulator bzw. das erfindungsgemäße Verfahren bei einem Haushaltsgerät umgesetzt und genutzt werden.

Mit anderen Worten können erfindungsgemäß, vorzugsweise ohnehin vorhandene, elektronische Bauteile eines Batteriemanagementsystems eines Akkumulators (zusätzlich) als stromlimitierende Bauteile verwendet werden, um einen Stromfluss zwischen Lader und Zellen bzw. zwischen Zellen und Verbraucher zu begrenzen. Hierdurch können unzulässige hohe Ströme bzw. Stromflüsse jeweils vermieden und somit die beteiligten elektronischen Geräte bzw. deren elektronische Schaltungen geschützt werden.

Beispielsweise kann dies jeweils mittels sich selbstsperrender n-Kanal MOS-Fets umgesetzt werden. Um diese MOS-Fets einzuschalten, kann am Gate des Fets eine positive Spannung im Bezug zum jeweiligen Source des Fets aufgebaut werden. Ist dies der Fall, wird die jeweilige Fet-Bodydiode "quasi" kurzgeschlossen; die Fet-Strecke zwischen Drain und Source-Anschluss wird leitend. Je höher die Spannung zwischen Gate und Source des MOS-Fets ansteigt, umso mehr sinkt üblicherweise der ohmsche Widerstand zwischen Drain und Source-Anschluss. Dieser Zusammenhang kann erfindungsgemäß genutzt werden, indem die Spannungshöhe zwischen Gate und Source des MOS-Fets so gewählt wird, dass der entsprechende Fet wie ein ohmsches Potentiometer mit nur zwei Stellungen genutzt werden kann.

Beispielsweise kann derart vorgegangen werden, indem die MOS-Fets vom BMS mit einem ersten Spannungswert auf "In-rush Limitation" eingeschaltet werden, beispielsweise 4V. In diesem Zustand kann ein Potentialausgleich zwischen Lader und Zellen oder zwischen Zellen und Verbraucher strombegrenzt stattfinden und hohe Ströme sowie "Blitze" können vermieden werden.

Das BMS kann dann feststellen, dass ein Potentialausgleich stattgefunden hat und abgeschlossen ist. Dies kann beispielsweise über die Auswertung des Stromflusses in Akku erfolgen. Nun können die MOS-Fets vom BMS mit einem zweiten Spannungswert "No Current Limitation" eingeschaltet werden, beispielsweise 15V. Nun kann der Stromfluss wie üblich erfolgen.

Erfindungsgemäß können durch dieses Vorgehen "Blitze" sowie eine unzulässig hohe Erwärmung der MOS-Fets vermieden werden.

Ein Ausführungsbeispiel der Erfindung ist in den Zeichnungen rein schematisch dargestellt und wird nachfolgend näher beschrieben. Es zeigt
- Figur 1: ein Blockschaltbild eines erfindungsgemäßen Akkumulators; und
- Figur 2: ein Ablaufdiagramm eines erfindungsgemäßen Verfahrens.

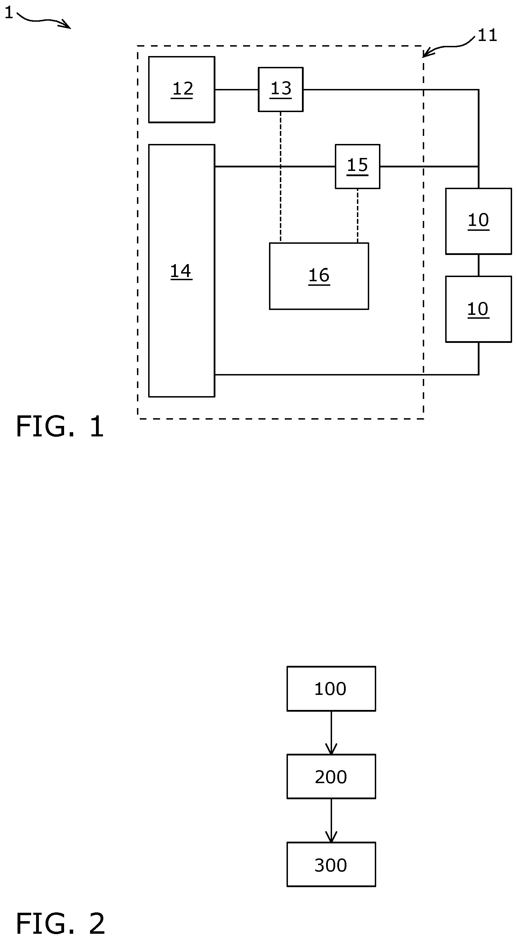

Ein erfindungsgemäßer Akkumulator 1 weist mehrere galvanische Elemente 10 in Form von galvanischen Zellen 10 sowie ein Batteriemanagementsystem 11 auf, siehe Figur 1. Mittels eines Lader-Eingangs 12 des Batteriemanagementsystems 11 kann der Akkumulator 1 mit einem Ladegerät (nicht dargestellt) elektrisch leitfähig verbunden werden, so dass das Ladegerät die galvanischen Zellen 10 aufladen kann. Hierzu ist das Ladegerät an den Lader-Eingang 12 anzuschließen. Der Lader-Eingang 12 ist elektrisch leitfähig mit den galvanischen Zellen 10 verbunden. Ebenso ist ein Verbraucher-Ausgang 14 des Batteriemanagementsystems 11 vorhanden, welcher die galvanischen Zellen 10 elektrisch leitfähig mit einem Verbraucher (nicht dargestellt) verbindet, falls der Verbraucher an den Verbraucher-Ausgang 14 angeschlossen wird. Hierdurch kann der Verbraucher mit der elektrischen Energie betrieben werden, welche in den galvanischen Zellen 10 gespeichert ist.

Um in dem Moment, wenn entweder das Ladegerät mit dem Lader-Eingang 12 oder der Verbraucher mit dem Verbraucher-Ausgang 14 elektrisch leitfähig verbunden wird, einen kurzzeitigen unzulässig hohen Stromfluss aufgrund des Potentialausgleichs zu vermeiden, ist erfindungsgemäß zum einen ein Strombegrenzer 13 zwischen dem Lader-Eingang 12 und den galvanischen Zellen 10 und zum anderen ein Strombegrenzer 15 zwischen den galvanischen Zellen 10 und dem Verbraucher-Ausgang 14 vorgesehen. Die beiden Strombegrenzer 13, 15 können als selbstsperrende n-Kanal MOS-Fets umgesetzt sein. In jedem Fall können die beiden Strombegrenzer 13, 15 von einer Steuerungseinheit 16 des Batteriemanagementsystems 11 betrieben werden, wobei die Steuerungseinheit 16 auch weitere Funktionen des Batteriemanagementsystems 11 durchführen kann.

Die Funktionsweise der beiden Strombegrenzer 13, 15 wird nun anhand des erfindungsgemäßen Verfahrens der Figur 2 für den Strombegrenzer 13 des Lader-Eingangs 12 beschrieben, welcher zwischen dem Lader-Eingang 12 und den galvanischen Zellen 10 angeordnet ist. Dies gilt ebenso für den Strombegrenzer 15 des Verbraucher-Ausgangs 14, welcher zwischen den galvanischen Zellen 10 und dem Verbraucher-Ausgang 14 angeordnet ist.

Seitens der Steuerungseinheit 16 erfolgt ein Erfassen 100 eines Stromflusses zwischen dem Lader-Eingang 12 und der galvanischen Zelle 10. Ist der Lader-Eingang 12 nicht mit dem Ladegerät verbunden, so liegt kein Stromfluss vor. Da in diesem Fall jedoch damit zu rechnen ist, dass ein Benutzer des Akkumulators 1 bzw. eines entsprechenden Geräts, insbesondere Haushaltsgerät wie beispielsweise ein Staubsauger bzw. ein Handstaubsauger, irgendwann das Ladegerät an den Lader-Eingang 12 anschließen wird, um den Akkumulator 1 bzw. dessen galvanische Zellen 10 zu laden, erfolgt ein Begrenzen 200 des Stromflusses mittels des Strombegrenzers 13 des Lader-Eingangs 12. Dies kann seitens der Steuerungseinheit 16 umgesetzt werden, indem der Strombegrenzer 13 in einen entsprechenden ersten Zustand versetzt bzw. geschaltet bzw. in einem entsprechenden ersten Zustand betrieben wird.

Wird nun vom Benutzer das Ladegerät an den Lader-Eingang 12 angeschlossen, so bewirkt die hierzu hergestellte elektrisch leitfähige Verbindung einen Stromfluss vom Ladegerät über den Lader-Eingang 12 durch den Strombegrenzer 13 des Lader-Eingangs 12 hindurch zu den galvanischen Zellen 10. Dieser Stromfluss ist jedoch erfindungsgemäß ausreichend auf eine zulässige Stromstärke begrenzt, um einen kurzzeitigen unzulässig hohen Stromfluss aufgrund des Potentialausgleichs zu vermeiden.

Dabei wird das Begrenzen 200 des Stromflusses mittels des Strombegrenzers 13 des Lader-Eingangs 12 ausreichend lang beibehalten, bis zu erwarten ist, dass der Potentialausgleich abgeschlossen ist und die Stromstärke ein zulässiges Maß erreicht hat. Eine entsprechende Zeitdauer kann vorgegeben sein. Alternativ kann der Stromfluss auch weiterhin erfasst werden, um zu erkennen, wann die Stromstärke ein zulässiges Maß erreicht hat, d.h. ein Stromfluss in einer vorbestimmten zulässigen Höhe vorliegt.

In jedem Fall kann dann ein Nicht-Begrenzen 300 des Stromflusses zwischen dem Lader-Eingang 12 und der galvanischen Zelle 10 erfolgen, um das Aufladen der galvanischen Zellen 10 wie bisher bekannt durchführen zu können.

### Bezugszeichenliste (Bestandteil der Beschreibung)

- 1: Akkumulator
- 10: galvanische Elemente; galvanische Zellen
- 11: Batteriemanagementsystem (BMS)
- 12: Lader-Eingang des Batteriemanagementsystems 11
- 13: Strombegrenzer des Lader-Eingangs 12
- 14: Verbraucher-Ausgang des Batteriemanagementsystems 11
- 15: Strombegrenzer des Verbraucher-Ausgangs 14
- 16: Steuerungseinheit des Batteriemanagementsystems 11
- 100: Erfassen eines Stromflusses
- 200: Begrenzen des Stromflusses
- 300: Nicht-Begrenzen des Stromflusses

## Patentansprüche

1. Akkumulator (1)
mit wenigstens einer galvanischen Zelle (10) und
mit einem Batteriemanagementsystem (11), welches ausgebildet und eingerichtet ist, den Akkumulator (1) zu betreiben,
wobei das Batteriemanagementsystem (11) aufweist:
• einen Lader-Eingang (12), welcher ausgebildet und eingerichtet ist, mit einem Ladegerät verbunden zu werden und das Ladegerät stromführend mit der galvanischen Zelle (10) zu verbinden, und
• einen Verbraucher-Ausgang (14), welcher ausgebildet und eingerichtet ist, mit einem Verbraucher verbunden zu werden und die galvanische Zelle (10) stromführend mit dem Verbraucher zu verbinden,
**dadurch gekennzeichnet, dass**
zwischen dem Lader-Eingang (12) und der galvanischen Zelle (10) ein Strombegrenzer (13) des Lader-Eingangs (12) vorgesehen ist, welcher ausgebildet und eingerichtet ist,
• in einem ersten Zustand den Stromfluss zwischen dem Lader-Eingang (12) und der galvanischen Zelle (10) zu begrenzen und
• in einem zweiten Zustand den Stromfluss zwischen dem Lader-Eingang (12) und der galvanischen Zelle (10) nicht zu begrenzen, und/oder
zwischen der galvanischen Zelle (10) und dem Verbraucher-Ausgang (14) ein Strombegrenzer (15) des Verbraucher-Ausgangs (14) vorgesehen ist, welcher ausgebildet und eingerichtet ist,
• in einem ersten Zustand den Stromfluss zwischen der galvanischen Zelle (10) und dem Verbraucher-Ausgang (14) zu begrenzen und
• in einem zweiten Zustand den Stromfluss zwischen der galvanischen Zelle (10) und dem Verbraucher-Ausgang (14) nicht zu begrenzen.

2. Akkumulator (1) nach Anspruch 1,
wobei das Batteriemanagementsystem (11) eine Steuerungseinheit (16) aufweist, welche ausgebildet und eingerichtet ist, den Strombegrenzer (13) des Lader-Eingangs (12) und/oder den Strombegrenzer (15) des Verbraucher-Ausgangs (14) im ersten Zustand und im zweiten Zustand zu betreiben.

3. Akkumulator (1) nach Anspruch 2,
wobei die Steuerungseinheit (16) des Batteriemanagementsystems (11) ferner ausgebildet und eingerichtet ist,
• einen Stromfluss zwischen dem Lader-Eingang (12) und der galvanischen Zelle (10) und/oder einen Stromfluss zwischen der galvanischen Zelle (10) und dem Verbraucher-Ausgang (14) zu erfassen und
• den Strombegrenzer (13) des Lader-Eingangs (12) und/oder den Strombegrenzer (15) des Verbraucher-Ausgangs (14) im ersten Zustand zu betreiben, falls kein Stromfluss vorliegt.

4. Akkumulator (1) nach Anspruch 3,
wobei das Betreiben im ersten Zustand fortgesetzt wird, falls ein Stromfluss beginnt.

5. Akkumulator (1) nach Anspruch 3,
wobei die Steuerungseinheit (16) des Batteriemanagementsystems (11) ferner ausgebildet und eingerichtet ist, den Strombegrenzer (13) des Lader-Eingangs (12) und/oder den Strombegrenzer (15) des Verbraucher-Ausgangs (14) im zweiten Zustand zu betreiben, falls ein Stromfluss in einer vorbestimmten zulässigen Höhe vorliegt.

6. Akkumulator (1) nach einem der vorangehenden Ansprüche,
wobei der Strombegrenzer (13) des Lader-Eingangs (12) und/oder der Strombegrenzer (15) des Verbraucher-Ausgangs (14) ein selbstsperrender n-Kanal MOS-Fet ist.

7. Verfahren zum Betreiben eines Akkumulators (1) mittels eines Batteriemanagementsystems (11),
wobei der Akkumulator (1) wenigstens eine galvanische Zelle (10) aufweist und
wobei das Batteriemanagementsystem (11) aufweist:
• einen Lader-Eingang (12), welcher ausgebildet und eingerichtet ist, mit einem Ladegerät verbunden zu werden und das Ladegerät stromführend mit der galvanischen Zelle (10) zu verbinden, und
• einen Verbraucher-Ausgang (14), welcher ausgebildet und eingerichtet ist, mit einem Verbraucher verbunden zu werden und die galvanische Zelle (10) stromführend mit dem Verbraucher zu verbinden,
mit wenigstens den Schritten in dieser Reihenfolge:
• Begrenzen (200) des Stromflusses zwischen dem Lader-Eingang (12) und der galvanischen Zelle (10) oder zwischen der galvanischen Zelle (10) und dem Verbraucher-Ausgang (14) und
• Nicht-Begrenzen (300) des Stromflusses zwischen dem Lader-Eingang (12) und der galvanischen Zelle (10) oder zwischen der galvanischen Zelle (10) und dem Verbraucher-Ausgang (14).

8. Verfahren nach Anspruch 7
mit dem weiteren Schritt vor dem Begrenzen (200):
• Erfassen (100) eines Stromflusses zwischen dem Lader-Eingang (12) und der galvanischen Zelle (10) und/oder zwischen der galvanischen Zelle (10) und dem Verbraucher-Ausgang (14),
wobei das Begrenzen (200) des Stromflusses zwischen dem Lader-Eingang (12) und der galvanischen Zelle (10) oder zwischen der galvanischen Zelle (10) und dem Verbraucher-Ausgang (14) dann erfolgt, falls kein Stromfluss vorliegt.

9. Verfahren nach Anspruch 8,
wobei das Begrenzen (200) fortgesetzt wird, falls ein Stromfluss beginnt.

10. Verfahren nach Anspruch 8,
wobei das Nicht-Begrenzen (300) des Stromflusses zwischen dem Lader-Eingang (12) und der galvanischen Zelle (10) oder zwischen der galvanischen Zelle (10) und dem Verbraucher-Ausgang (14) dann erfolgt, falls ein Stromfluss in einer vorbestimmten zulässigen Höhe vorliegt.

11. Haushaltsgerät, vorzugsweise Staubsauger, besonders vorzugsweise Handstaubsauger, mit wenigstens einem Akkumulator (1) nach einem der Ansprüche 1 bis 6 oder zur Durchführung eines Verfahrens nach einem der Ansprüche 7 bis 10.
